# EUROPEAN PATENT SPECIFICATION

(11) **EP 2 258 653 B1**
(45) Date of publication and mention of the grant of the patent: **17.04.2013**
(21) Application number: 10250908.0
(22) Date of filing: 12.05.2010
(51) Int. Cl.: B66F 9/08, F16G 13/02, F16G 13/04, F16G 13/16, F16G 13/18, F16G 13/20

(54) **A lifting chain assembly**
Hubkettenanordnung
Ensemble de chaîne de levage

(30) Priority: 02.06.2009 GB 0909414
(43) Date of publication of application: 08.12.2010
(73) Proprietor: RENOLD Plc, Wythenshawe Manchester M22 5WL (GB)
(72) Inventor: Christmas, Michael Charles, Cheshire CW8 1AP (US)
(74) Representative: Every, David Aidan

(56) References cited:
- EP-A1- 0 693 639
- EP-A1- 0 911 538
- WO-A1-00/56655
- DE-U1- 8 619 091
- GB-A- 2 118 270
- GB-A- 2 153 041
- JP-A- 2006 029 462

## Description

The present invention relates to a lifting chain assembly and more particularly, but not exclusively, to a lifting chain assembly of the kind that is used in the raising and lowering of a lifting fork carriage of a forklift truck or other similar mobile load carrying vehicle.

In forklift trucks the lifting fork carriage is raised or lowered by a mast assembly comprising at least one hydraulic cylinder having a sheave rotatably mounted at its upper end and around which is trained a lifting chain. A lower end of the cylinder is fixed to the truck. A first end of the lifting chain is connected to the lifting fork carriage by an anchor assembly and the other end of the chain is fixed to a stationary structure on the truck.

It is known for the mast assembly to have one or more lifting chains and sheaves, the chains being conveniently connected to the carriage. When the hydraulic cylinder is extended the sheave (or sheaves) is moved upwardly and the chain (or chains) is lifted so as to raise the carriage. Upward movement of the sheaves causes the chain (or chains) to move over the sheaves whereby frictional engagement between the sheaves and the chain causes the sheaves to rotate. So as to reduce the friction (and thereby wasted energy) in the system the sheaves are mounted via bearings. This arrangement of sheaves and bearings is complicated to manufacture and assemble and must be periodically maintained so as to ensure efficient running. Less frequently, it is necessary to replace sheaves and/or bearings due to wear, which is a time consuming and cost inefficient task.

WO00/56655 describes a lifting chain assembly of a forklift truck in which a chain has a first end connected to an anchor and a second end connected to a lifting fork carriage on which a load may be supported. The chain is trained over a sheave which is moved relative to the anchor by a mask assembly to effect movement of the lifting carriage.

It is an object of the present invention to obviate or mitigate the aforesaid disadvantages or problems.

According to a first aspect of the present invention there is provided a lifting chain assembly including: an anchor; a support member movable relative to the anchor so as to vary the distance between the anchor and the support member; and a chain having first and second ends, the chain comprising a plurality of interleaved link assemblies, each link assembly comprising outer link plates and an intermediate link member, two adjacent link assemblies being connected via a pivotal connection between the intermediate link member of one assembly and the outer link plates of the other; wherein the first end of the chain is anchored to the anchor and a portion of the chain is trained over the support member; such that the at least one bearing surface of at least one intermediate link member is in sliding contact with a surface of the support member; and wherein, in use, the second end of the chain is attached to a load such that the support member and the anchor support the load via the chain; characterised in that the intermediate link member defines at least one bearing surface which forms a portion of the exterior surface of the chain radially outwardly of the pivot axis, the at least one bearing surface comprising a material having a lower coefficient of friction than that of steel; and in that movement of the support member relative to the anchor causes the chain to slide over the surface of the support member, the support member being fixed against rotation.

The coefficient of friction of the material is suitably measured as static friction against dry clean steel using a pin-on-disk tribometer with a 50N load, and is suitably 0.5 or less, preferably 0. 4 or less. The chain is preferably of a type known in the art as a "leaf chain".

The chain link plates and members articulate relative to one another such that the chain wrapped around part of support member. Moreover the chain is, in use, put under tension by virtue of a load but is nevertheless in a position to slide relative to the surface of the support member when under load

The provision of a chain with a bearing surface with a lower coefficient of friction than that of steel is advantageous in that the chain may be trained over a support member (such as that activated by a hydraulic cylinder on a forklift truck) in sliding contact with the support member without the need for sheaves or pulleys on which the chain runs. This is because the coefficient of friction between the support member and the chain is reduced by the bearing surface to the extent that the chain slips over the structure without prohibitive friction-based heat production or damage to the support member or chain.

The support member may be fixed against rotation and may have an outer substantially cylindrical surface around part of which the chain is trained.

The intermediate link member may define at least two bearing surfaces defining portions of opposite exterior surfaces of the chain. This is advantageous in that the chain may be reversed when the bearing surfaces on one side of the chain have been worn out, thus doubling the life of the chain.

The intermediate link member and the at least one bearing surface may be formed integrally of the same material. This allows a simple construction using, for instance, injection moulding or machining of a single piece so as to form the entire intermediate link member, including the bearing surfaces.

At least one of the bearing surfaces may be radially further from the pivot than any portion of the outer link plates. This means that the bearing surface will engage with the support member and not the outer link plates adjacent the bearing surface. This is advantageous in that friction between the outer plates and the support member is reduced to zero because they are not in contact with one another. In general, it will be appreciated that the bearing surfaces of a chain in accordance with this aspect of the present invention are preferably arranged such that when the chain is trained over the support member, only the bearing surfaces are in; contact with the support member.

An extension portion of the intermediate link plate may extend radially further from the pivot than the outer plates and comprise a material having a low coefficient of friction- This extension portion preferably defines the bearing surface. This is advantageous in that a greater amount of wear is possible before the chain needs to be replaced.

The extension portion may be tapered so as to allow each pivotal connection to pivot to a greater extent, such that the chain may be deformable to pass around a support member of low radius of curvature without nearby intermediate links fouling against each other. The low-friction material may comprise any suitable material such as a ceramic or a polymer material such as a thermoplastic polymer. The low-friction material may comprise polyaryletheretherketone (PEEK). The outer link plates may comprise a metal such as steel. It will be appreciated that the low friction material may comprise any suitable material with sufficient strength and low friction properties to fulfil the dual function of providing tensile strength in the chain load direction and good bearing properties. It should be noted that the present invention also eliminates (or at least reduces) the need for maintenance lubrication of the chain.

The intermediate link plate may define a pair of opposed clip members for receipt of a cable or the like. This is advantageous in that cables or the like may be held by the chain so as to reduce the clutter in any given mechanical environment. To this end, in use, the clip members may hold the cable alongside the chain, for instance laterally outside the chain in line with at least one of the outer plates and the intermediate plate. The intermediate link plate may define a mounting arm upon which the clip members are defined.

According to a second aspect of the present invention, there is provided the use of a lifting chain assembly as described above for driving a lifting fork carriage of a forklift truck, the chain being trained over and in sliding contact with a support member as described above configured to be raised by driving means, the first end of the chain being suitably anchored and the second end being attached to the lifting fork carriage.

Specific embodiments of the present invention will now be described, by way of example only, with reference to the accompanying drawings in which:
Figure 1 is a perspective view of a first embodiment of part of a length of a chain in accordance with an aspect of the present invention;
Figure 2 is a side elevation of the chain shown in figure 1;
Figure 3 is a perspective view of the chain of figure 1 in use around a generally cylindrical crossbeam in accordance with an aspect of the present invention;
Figure 4 is a side elevation of the chain of figure 1 in use as shown in figure 3;
Figure 5 is a perspective view of a second embodiment of part of a length of a chain in accordance with an aspect of the present invention;
Figure 6 is a side elevation of the chain of figure 5 in use around a cylindrical crossbeam in accordance with an aspect of the present invention;
Figure 7 is a perspective view of an alternative intermediate link member which may be used in place of one or more of the intermediate link members in the chain of figure 1;
Figure 8 is a further perspective view of the intermediate link of figure 7;
Figure 9 is a perspective view of an alternative intermediate link member which may be used in place of one or more of the intermediate link members in the chain of figure 1;
Figure 10 is a further perspective view of the intermediate link of figure 9;
Figure 11 is a perspective view of a third embodiment of part of a length of a chain in accordance with an aspect of the present invention;
Figure 12 is a perspective view of the chain of figure 11 in use around a cylindrical crossbeam in accordance with an aspect of the present invention;
Figure 13 is a side elevation of the chain of figure 9 in use as in figure 12;
Figure 14 is a perspective view of a fourth embodiment of part of a length of a chain in accordance with an aspect of the present invention;
Figure 15 is a perspective view of an embodiment of part of a length of a chain;
Figure 16 is a side elevation of the chain of figure 15 in use around a generally cylindrical drive shaft having recesses which fit corresponding teeth defined on the chain;
Figure 17 is a side elevation of a forklift vehicle in accordance with an aspect of the present invention; and
Figure 18 is a front elevation of the forklift vehicle of figure 17.

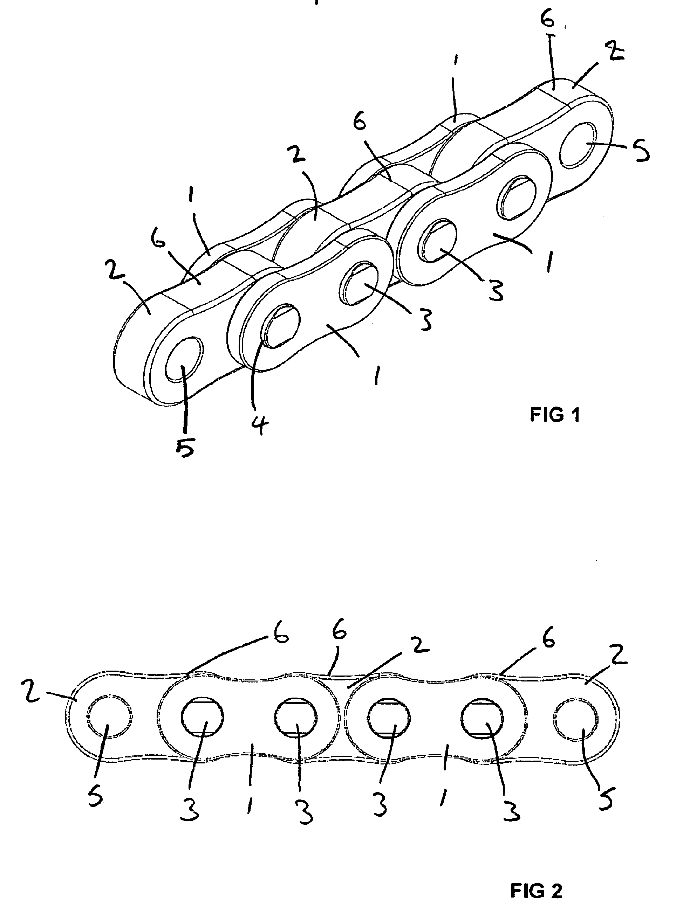

Referring now to the drawings, a first embodiment of a chain according to an aspect of the present invention is shown in figures 1 to 4.

The chain comprises outer link plates 1 that flank intermediate link members 2 on each side along the length of the chain, the plates and link members being connected together in a pivotal relationship by pins 3 that extend substantially transverse to the longitudinal axis of the chain. Each outer link plate 1 is generally planar and has a generally figure-eight in-plane shape. Thus, each plate 1 defines a pair of apertures 4 through the thickness of the plate 1, which lie on the in-plane centre line of the plate 1. Each intermediate link member 2 is of a generally similar in-plane shape to the outer link plates 1, but is both thicker and wider than the outer link plates 1. Each intermediate link member 2 defines a pair of bores 5 extending through the thickness of the member 2. Thickness, in the context of this description, is perpendicular to the plane; width is the in-plane dimension perpendicular to the centre line; and length is the in-plane dimension parallel to the centre line.

The outer link plates 1 comprise steel, though it will be appreciated that the outer link plates 1 may readily be constructed of any desirable material (or materials). The intermediate link members 2 comprise polyaryletheretherketone (PEEK). PEEK is a thermoplastics material which combines a relatively high tensile strength (approximately 90-100Mpa) with a lower coefficient of friction than steel against materials commonly used in connection with chains (e.g. a static coefficient of friction of 0.35 for PEEK against steel as opposed to a value closer to 0.7 for steel against steel). It will be appreciated that the intermediate link plates 2 may comprise any desirable material including a plastics (more particularly thermoplastics) material or a ceramic. The material of which the intermediate members are comprised should have a lower coefficient of friction than steel as against common materials use in mechanical applications. It will be appreciated that the outer and inner link plates 1,2 may be formed by any desirable method including by a machining or a die casting process.

When assembled, the outer link plates 1 and the intermediate link members 2 are interleaved such that each opposed pair of outer link plates 1 receive between them the ends of two intermediate link members 2. The overlapping ends of the intermediate and outer link plates 1,2 are pivotally interconnected by means of two pins 3 which pass through the apertures 4 and the bores 5 in the ends of the plates 1,2. The outer link plates 1 are connected to the pin 3 by way of an interference fit between the pin 3 and portions of the outer link plates 1 which define the apertures 4 (i.e. the outer link plates 1 are non-rotatable on the pin 3) whereas the bores 5 defined by the intermediate link members 2 form a clearance fit with the pin (i.e. they are free to rotate on the pin 3).

It will be appreciated that chains in accordance with any aspect of the present invention may be configured with other arrangements of interleaved intermediate link members 2. For example, each intermediate link member 2 may readily be replaced by two or more intermediate link members in either an immediately adjacent or a spaced apart configuration. Moreover, the relatively thick intermediate member 2 of the present embodiment may readily be replaced by two or more thinner intermediate link members.

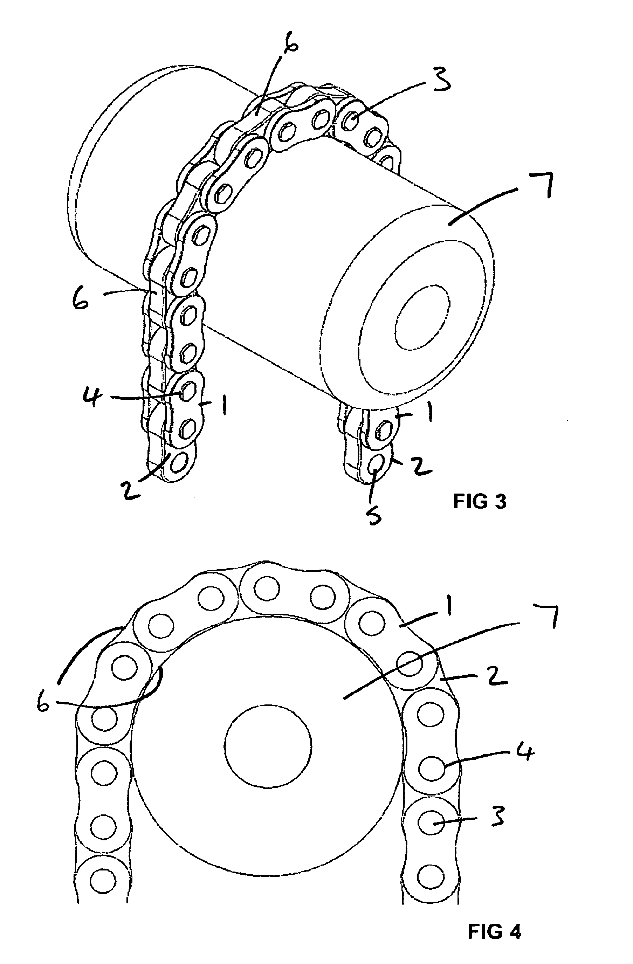

As shown in figure 2, portions of the intermediate link members 2 are wider than the inner link plates such that, when the chain is assembled, the intermediate link members 2 project laterally outwardly beyond the outer link plates 1 so as to form outwardly laterally facing bearing surfaces 6 on both sides of the chain and generally parallel to the bores 5. Thus, as shown in figure 4, when the chain is laid over a fixed crossbeam 7 (i.e. an arm which does not rotate with the chain but rather remains fixed while the chain runs over it) the result is that the bearing surfaces 6 of the intermediate link members 3 are in contact with the crossbeam 7 while the outer link plates 1 are held away from the crossbeam 7 by the intermediate link members 2. In use, as the chain passes over the fixed crossbeam 7, the bearing surfaces 6 remain engaged with the crossbeam 7 and rub against it.

Advantageously, the provision of bearing surfaces 6 on the intermediate link members 2 which comprise a material having a lower coefficient of friction than that of standard chain materials (such as steel) eliminates the need for friction reducing mechanism such as sheaves or pulleys which run on bearing arrangements. Rather, a machine such as a fork lift truck which uses a chain in accordance with an aspect of the present invention may dispense with a sheave or pulley mechanism altogether and merely provide a fixed arm mounted at the end of a hydraulic cylinder over which the chain is trained. This has clear advantages in that there are no bearing arrangements to maintain and/or replace. It should, however, be appreciated that this chain would also work when run over a conventional sheave or pulley.

Although intermediate link member 2 of the bearing surfaces of the chain itself may eventually wear down, it will be appreciated that the chain may be replaced more easily than a sheave or pulley and its bearings. Moreover, in applications such as that described above with reference to forklift trucks, in which the chain is trained over a surface supported by a hydraulic cylinder, only one of the bearing surfaces 6 of each intermediate link member 2 wears against the cylinder at any one time. When the bearing surfaces 6 on one side of the chain become unacceptably worn, the chain may simply be inverted (so that the bearing surfaces 6 on the opposite side of the chain bear against the arm or surface) so as to extend the life of the chain

It will be appreciated that a chain in accordance with the present invention may initially, or after an amount of wear, not hold the outer link plates 1 away from a surface or structure (such as a forklift crossbeam or sheave) over which the chain is trained and yet still provide an advantage of reduced friction over a chain in which neither the intermediate link members or the outer link plates comprise a material with reduced friction, such as for example a chain made entirely out of steel. This is because forming at least part of the chain from relatively low friction material reduces the overall friction on the chain. It will, however, be appreciated that wear on the bearing surfaces 6 of the intermediate members 2 of a given chain will eventually affect the low-friction properties of the chain to such an extent as to require that the chain be replaced. While this is likely to be cheaper and easier than replacing sheaves, pulleys or mechanical bearing arrangements, there remains nonetheless a cost associated with replacing a chain. There is therefore a clear need to provide chains which need to be replaced less frequently.

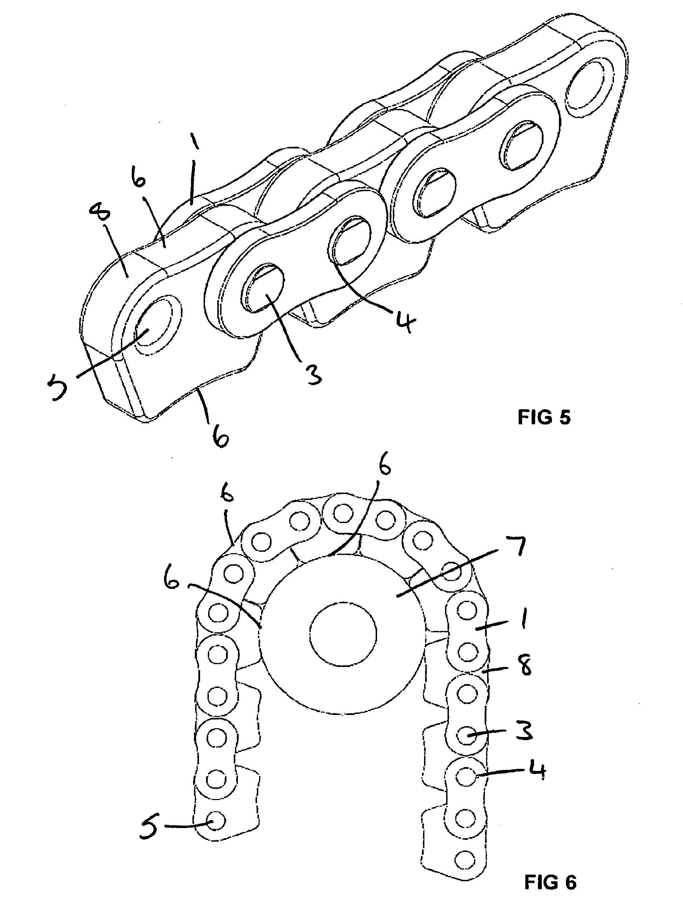

Figures 5 and 6 show a second embodiment of a chain in accordance with an aspect of the present invention, in which the intermediate link member has increased tolerance to wear and therefore needs to be replaced less frequently than the chain of the first embodiment. Reference numerals to features of the second embodiment which mirror features in the first embodiment remain unchanged, while modified (or new) features are given new reference numerals. This second embodiment differs from the first embodiment only in that the intermediate link members 8 have extend width on one side of the chain such that they extend far beyond the outer link plates 1. The intermediate link member 8 tapers as it extends laterally so that the length of the bearing surface 6 is shorter than a cross section of the intermediate link member 8 nearer the outer link plate 1. When the chain is curled inwards as shown in figure 6, the bearing surfaces 6 of the intermediate link members 8 move closer together. The tapering of the intermediate link members 8 has the effect that the chain may pass around a smaller diameter before the intermediate link members 8 abut one another, whereupon the chain is prevented from bending further. Accordingly, the tapering of the intermediate link members 8 allows the chain greater flexibility.

It will be appreciated that the extended width intermediate link members 8 may undergo a great deal more wear before needing to be replaced owing to their increased width relative to the outer plates 1. It will be appreciated that the width of the intermediate link members similarly extend from the other side of the chain so as to double the life of the chain, as is described in relation to the first embodiment. It will further be appreciated that the intermediate link members 8 of the present embodiment may readily be mixed with the intermediate link members 2 of the first embodiment so as to construct a chain comprising a mixture of the two types of intermediate link member 2,8.

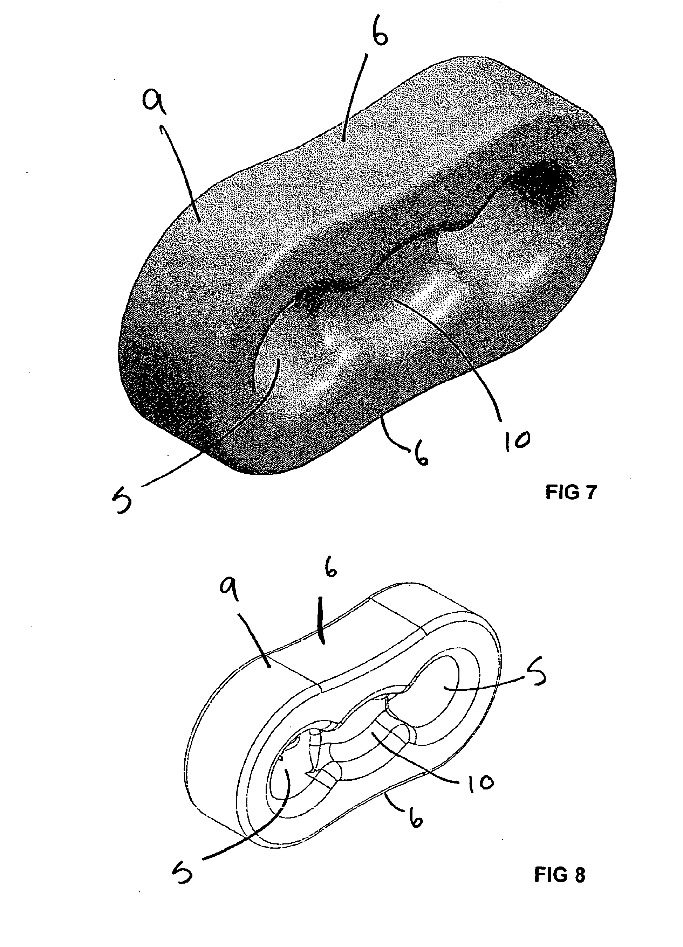

Figures 7 and 8 show an alternative intermediate link member 9 which may readily replace any of the intermediate link members 2,8 in the chains shown in figures 1 to 6. The alternative intermediate link member 9 is structurally very similar to the intermediate link members 2 shown in figures 1 to 4, differing only in that a central portion 10 of the intermediate link member 8 between the two bores 5 is of a reduced thickness so as to make more efficient use of materials.

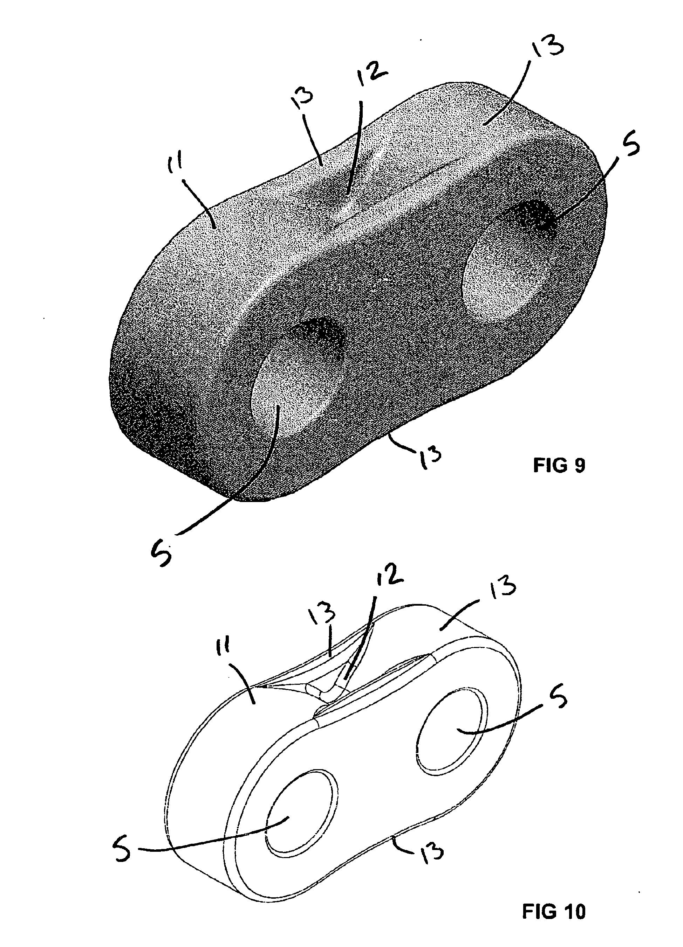

Figures 9 and 10 show another alternative intermediate link member 11 which may replace any of the intermediate link members 2 shown in figures 1 to 4 in a chain in accordance with an aspect of the present invention. The intermediate link member 11 differs from the intermediate link member 2 of figures 1 to 4 in that it defines a recess 12 in each of its bearing surfaces 13. The recesses 12 allow a reduction in the amount of material required to construct the alternative intermediate link member 11 when compared to the intermediate link member 2 of figures 1 to 4, while maintaining a portion of the bearing surfaces 13 for sliding engagement with a surface such as the crossbeam 7 shown in figures 3, 4 and 6.

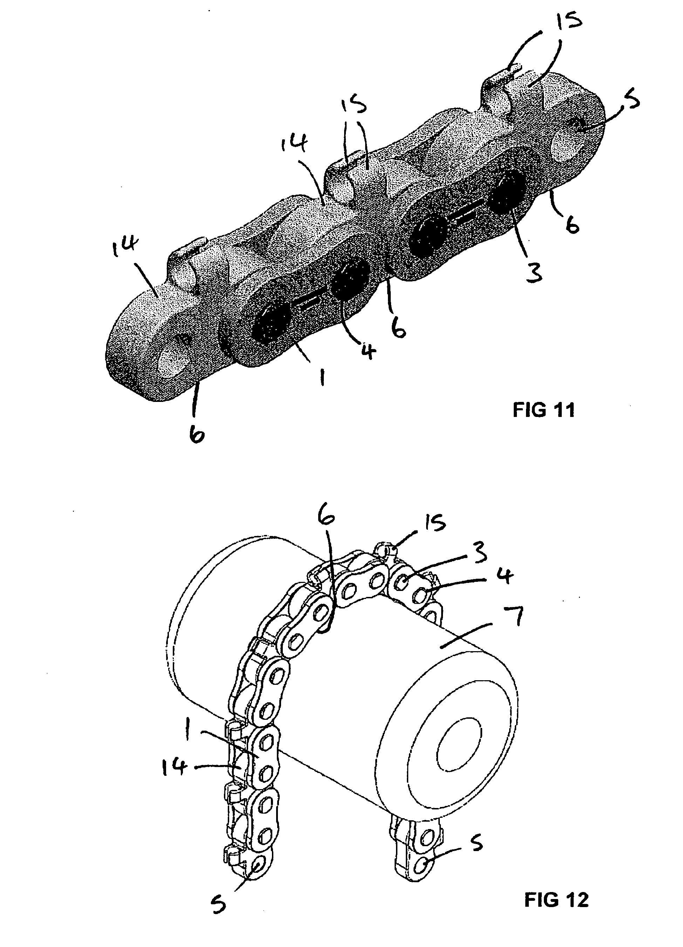

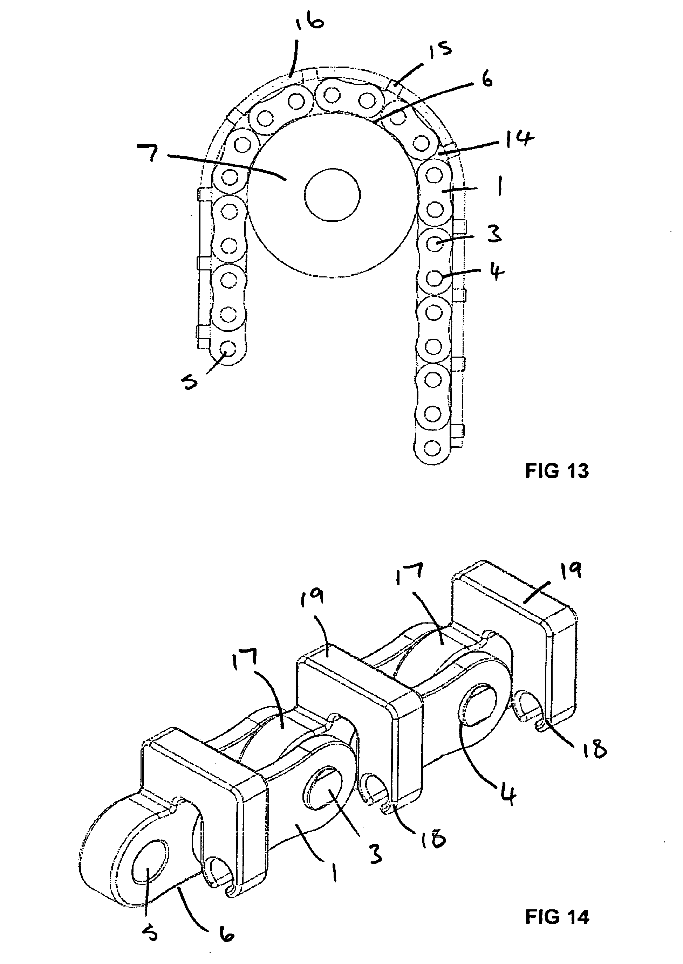

Figures 11 to 13 show a third embodiment of a chain in accordance with an aspect of the invention. The chain of this embodiment differs from the chain of the first embodiment, shown in figures 1 to 4, only in that one of the bearing surfaces 6 of each intermediate link member 14 has been replaced with a pair of clip members 15. Each intermediate member 14 in the chain bears clip members 15 on the same side of the chain so as to define a channel along the chain into which an element or elements may be placed so as to be carried by the chain. As shown in figure 13, in use the members 15 may be used to hold cabling 16. It will be apparent that when the chain of the present embodiment is used in a fork lift truck, the members 15 may be used to hold power and control cabling which must pass in front of a driver of the fork lift truck. Advantageously, the members 15 hold the cabling in a region of the driver's field of view which is already obscured by the chain itself.

Figure 14 shows a fourth embodiment of a chain in which the intermediate link members 17 are formed with a pair of opposed clip members 18 for similar purposes to those outlined in relation to the embodiment of figures 11 to 13. The intermediate link members 17 of this chain differs from the intermediate link members 14 of the third embodiment in that each pair of clip members 18 is formed on the end of a mounting arm 19. The mounting arm 19 is formed integrally with the intermediate link member 14 at a point opposite the bearing surface 6. The arm 19 extends around the intermediate plate the outer link plate 1 so as to provide clip members 15 at a point adjacent the bearing surface 6 of the intermediate plate 17. It will be apparent that such a configuration is advantageous in the event that it is desirable to carry cabling adjacent to one of the outer link plates 1 rather than on the opposite side of the chain to the bearing surfaces 6. This may be desirable if, for example, the orientation of the chain when used in a forklift truck is such that the chain is presented side on (as shown in figure 13) to a driver of the forklift truck.

Moreover, the mounting arm 19 is shaped such that the clip members 18 of the fourth embodiment hold the cable nearer to the centre line of the chain (i.e. in line with the pivot pins 3) than the third embodiment of figures 11 to 13. As a result, a cable carried by the clip members 18 of the fourth embodiment is stretched (or compressed) to a much lesser extent when the chain is flexed than the cable 16 is stretched (or compressed) during flexion of the chain of figures 11 to 13.

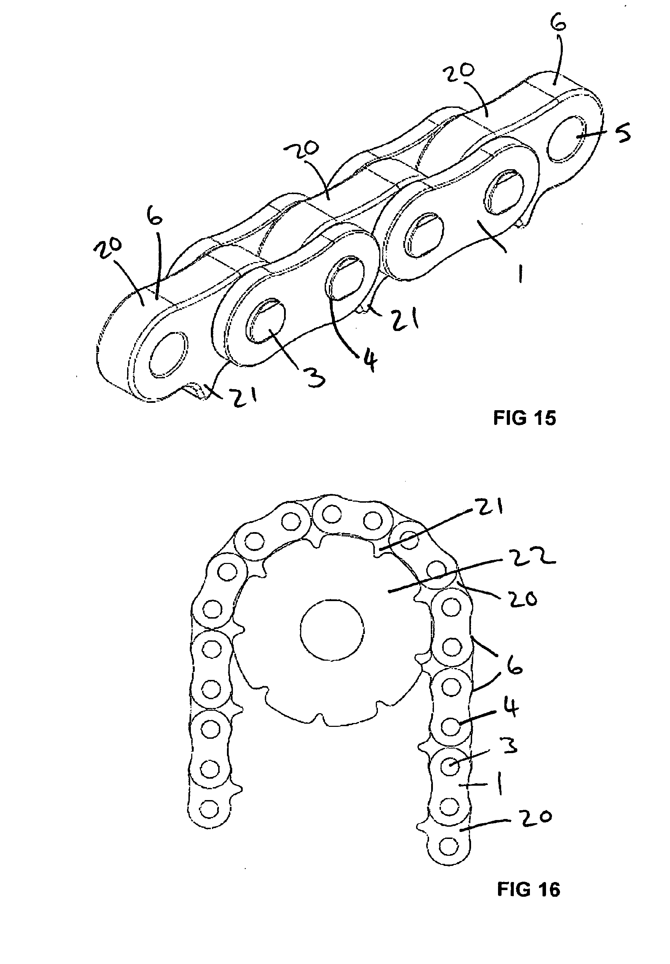

Figures 15 and 16 show an embodiment of a chain, which is not an aspect of the present invention. The intermediate link member 20 of this embodiment differs from that 2 of the first embodiment in that only one bearing surface 6 is defined on the plate 20 and teeth 21 are formed on the side of the plate 20 opposite the bearing surface 6. In use, as shown in figure 16, the chain is trained over a drive shaft 22 in such a way that the teeth 21 of the chain point inwardly towards the drive shaft 22. The drive shaft 22 defines indentations 23 which are formed to complement the teeth 21. It will be apparent that the engagement of the teeth 21 with the indentations 23 allows a driving force to be transferred between the drive shaft 22 and the chain, either driving the chain using a force applied to the drive shaft 22 or vice versa. It will be appreciated that another portion of the chain may be wrapped the opposite way around a crossbeam or another drive shaft in such a way that the bearing surfaces 6 of the intermediate link members 20 are in contact with the crossbeam or drive shaft rather than the teeth 21. This would allow the chain to function in a system in which the chain is driven via the teeth 21 and runs around one or more other structures in a low friction manner using the bearing surfaces 6.

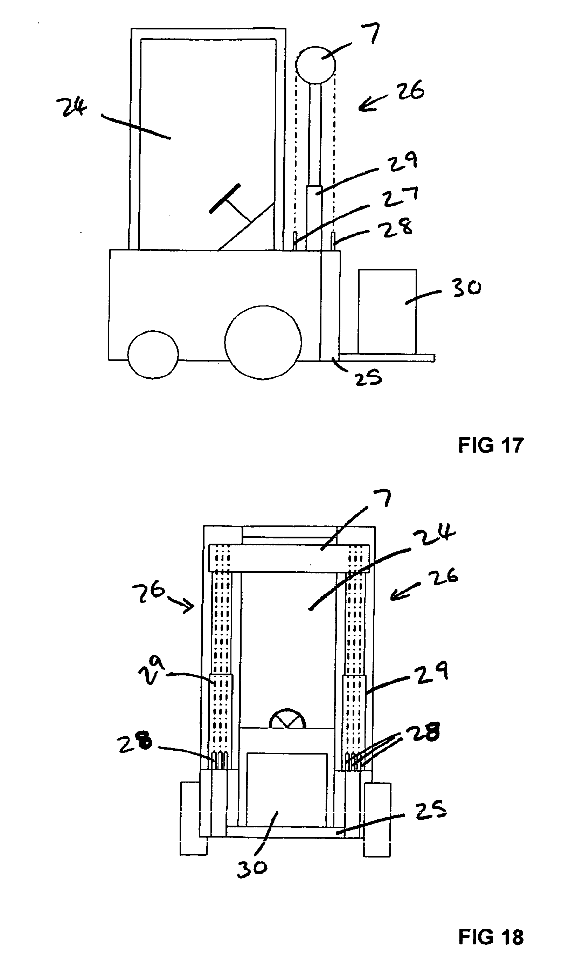

Figures 17 and 18 show a forklift vehicle in accordance with an aspect of the present invention. The forklift vehicle generally comprises a vehicle 24 and a mast assembly comprising a lifting fork carriage 25 and a pair of lifting chain assemblies 26, each comprising a number of chains. The lifting chain assemblies 26 are configured such that the chains of each are anchored at their first ends 27 to the vehicle 24 and at their second ends 28 to the lifting fork carriage 25. The chains are trained over a crossbeam 7, which is driven up and down by hydraulic cylinders 29. It will be appreciated that multiple crossbeams 7 may be provided. The lifting fork carriage 25 is shown bearing a load 30. Thus, as the crossbeam 7 is driven upwards, the chains pull the lifting fork carriage 25 upwards, which lifts the load 30. It will be appreciated that as the crossbeam 7 is lifted by the hydraulic cylinder 29, the chains slide over the crossbeam 7. This is a substantially simpler configuration than in a conventional forklift vehicle, in which the crossbeam would need to be replaced by a complicated (and difficult to maintain) arrangement of sheaves. The crossbeam may be fixed against rotation and may take any suitable form that allows the sliding movement of the chain.

It will be generally appreciated that features of any of the above embodiments may be combined in any desirable configuration in a single chain. Moreover, it will be appreciated that portions of chains according to any of the above embodiments may readily be combined with portions of more conventional chains, such as chains made entirely of steel, so as to provide the advantages of the invention in combination with the advantages of more conventional chains, such as cost efficiency.

## Claims

1. A lifting chain assembly (26) including:
an anchor;
a support member (7) movable relative to the anchor so as to vary the distance between the anchor and the support member; and
a chain having first and second ends (27,28), the chain comprising a plurality of interleaved link assemblies (1,2), each link assembly comprising outer link plates (1) and an intermediate link member (2;8;9;11;14;17;20), two adjacent link assemblies being connected via a pivotal connection (3,5) between the intermediate link member of one assembly and the outer link plates of the other;
wherein the first end (27) of the chain is anchored to the anchor and a portion of the chain is trained over the support member (7);
such that the at least one bearing surface (6) of at least one intermediate link member is in sliding contact with a surface of the support member (7); and
wherein, in use, the second end (28) of the chain is attached to a load (25,30) such that the support member (7) and the anchor support the load via the chain;
**characterised in that** the intermediate link member (2;8;9;11;14;17;20) defines at least one bearing surface (6) which forms a portion of the exterior surface of the chain radially outwardly of the pivot axis, the at least one bearing surface (6) comprising a material having a lower coefficient of friction than that of steel; and **in that** movement of the support member (7) relative to the anchor causes the chain to slide over the surface of the support member, the support member (7) being fixed against rotation.

2. The lifting chain assembly of claim 1 wherein the intermediate link member (2;8;9;.11;14;17;20) defines at least two bearing surfaces (6) defining portions of opposite exterior surfaces of the chain.

3. The lifting chain assembly of claim 1 or 2 wherein the intermediate link member (2;8;9;11;14;17;20) and the at least one bearing surface (6) are formed integrally of the same material.

4. The lifting chain assembly of any of claims 1 to 3 wherein a portion of the at least one bearing surface (6) is radially further from the pivot than any portion of the outer plates (1).

5. The lifting chain assembly of claim 4 wherein an extension portion of the intermediate link plate (2;8;9;11;4;17;20) extends radially further from the pivot than the outer plates and comprises a material having a low coefficient of friction, the extension portion defining the bearing surface (5).

6. The lifting chain assembly of claims 4 or 5 wherein the extension portion is tapered so as to allow each pivotal connection to pivot to a greater degree.

7. The lifting chain assembly of any preceding claim wherein the intermediate link plate comprises (2;8;9;11;14;17;20) ceramic.

8. The lifting chain assembly of any of claims 1 to 6 wherein the material is a thermoplastic such as polyaryletheretherketone (PEEK).

9. The lifting chain assembly of any preceding claim wherein the outer link plates (1) comprise steel.

10. The lifting chain assembly of any preceding claim wherein the intermediate link plate (14;17) defines a pair of opposed clip members (15;18) for receipt of a cable or the like.

11. The lifting chain assembly of any preceding claim therein the support member (7) is movable relative to the anchor by an actuator (29).

12. The lifting chain assembly of claim 11 wherein the actuator is a hydraulic cylinder (29).

13. The use of a lifting chain assembly according to any of claims 1 to 12 for driving lifting fork carriage (25) of a forklift vehicle, the chain being trained over and in sliding contact with a support member (7) configured to be raised by driving means (29), the first end (27) of the chain being anchored and the second end (28) being attached to the lifting fork carriage (25).

## Patentansprüche

1. Hubkettenbaugruppe (26), die Folgendes einschließt:
einen Anker,
ein Stützelement (7), das im Verhältnis zu dem Anker bewegt werden kann, um so den Abstand zwischen dem Anker und dem Stützelement zu verändern, und
eine Kette, die ein erstes und ein zweites Ende (27, 28) hat, wobei die Kette mehrere überlappte Gliederbaugruppen (1, 2) umfasst, wobei jede Gliederbaugruppe äußere Gliederplatten (1) und ein Zwischengliedelement (2; 8; 9; 11; 14; 17; 20) umfasst, wobei zwei benachbarte Gliederbaugruppen über eine Gelenkverbindung (3, 5) zwischen dem Zwischengliedelement der einen Baugruppe und den äußeren Gliederplatten der anderen verbunden sind,
wobei das erste Ende (27) der Kette an dem Anker verankert ist und ein Abschnitt der Kette über das Stützelement (7) gezogen ist,
derart, dass sich die wenigstens eine Lagerfläche (6) des wenigstens einen Zwischengliedelements in Gleitberührung mit einer Fläche des Stützelements (7) befindet, und
wobei, bei Anwendung, das zweite Ende (28) der Kette an einer Last (25, 30) befestigt ist derart, dass das Stützelement (7) und der Anker über die Kette die Last tragen,
**dadurch gekennzeichnet, dass** das Zwischengliedelement (2; 8; 9; 11; 14; 17; 20) wenigstens eine Lagerfläche (6) definiert, die einen Abschnitt der Außenfläche der Katte, in Radialrichtung von der Gelenkachse nach außen, bildet, wobei die wenigstens eine Lagerfläche (6) einen Werkstoff umfasst, der einen Reibungskoeffizienten hat, der niedriger ist als derjenige von Stahl, und dadurch dass eine Bewegung des Stützelements (7) im Verhältnis zu dem Anker bewirkt, dass die Kette über die Fläche des Stützelements gleitet, wobei das Stützelement (7) gegen eine Drehung fixiert ist.

2. Hubkettenbaugruppe nach Anspruch 1, wobei das Zwischengliedelement (2; 8; 9; 11; 14; 17; 20) wenigstens zwei Lagerflächen (6) definiert, die Abschnitte von gegenüberliegenden Außenflächen der Kette definieren,

3. Hubkettenbaugruppe nach Anspruch 1 oder 2, wobei das Zwischengliedelement (2; 8; 9; 11; 14; 17; 20) und die wenigstens eine Lagerfläche (6) integral aus dem gleichen Werkstoff geformt sind.

4. Hubkettenbaugruppe nach einem der Ansprüche 1 bis 3, wobei ein Abschnitt der wenigstens einen Lagerfläche (6) in Radialrichtung weiter von dem Drehgelenk entfernt ist als ein beliebiger Abschnitt der äußeren Platten (1).

5. Hubkettenbaugruppe nach Anspruch 4, wobei sich ein Erweiterungsabschnitt der Zwischengliedplatte (2; 8; 9; 11; 14; 17; 20) in Radialrichtung weiter von dem Drehgelenk entfernt erstreckt als die äußeren Platten und einen Werkstoff umfasst, der einen niedrigen Reibungskoeffizienten hat, wobei der Erweiterungsabschnitt die Lagerfläche (6) definiert.

6. Hubkettenbaugruppe nach Anspruch 4 oder 5, wobei der Erweiterungsabschnitt verjüngt ist, so dass er ermöglicht, dass jede Gelenkverbindung um ein größeres Ausmaß schwenkt.

7. Hubkettenbaugruppe nach einem der vorhergehenden Ansprüche, wobei die Zwischengliedplatte (2; 8; 9; 11; 14; 17; 20) Keramik umfasst.

8. Hubkettenbaugruppe nach einem der Ansprüche 1, bis 6, wobei der Werkstoff ein thermoplastischer Kunststoff, wie beispielsweise Polyaryletheretherketon (PEEK), ist.

9. Hubkettenbaugruppe nach einem der vorhergehenden Ansprüche, wobei die äußeren Gliederplatten (1) Stahl umfassen.

10. Hubkettenbaugruppe nach einem der vorhergehenden Ansprüche, wobei die Zwischengliedplatte (14; 17) ein Paar von gegenüberliegenden Schellenelementen (15; 18) zum Aufnehmen von einem Kabel oder dergleichen definiert.

11. Hubkettenbaugruppe nach einem der vorhergehenden Ansprüche, wobei das Stützelement (7) durch einen Stellantrieb (29) im Verhältnis zu dem Anker bewegt werden kann.

12. Hubkettenbaugruppe nach Anspruch 11, wobei der Stellantrieb ein Hydraulikzylinder (29) ist.

13. Verwendung einer Hubkettenbaugruppe nach einem der Ansprüche 1 bis 12 zum Antreiben eines Hubgabelschlittens (25) eines Gabelstaplers, wobei die Kette über ein Stützelement (7) gezogen und in Gleitberührung mit demselben ist, das dafür konfiguriert ist, durch Antriebsmittel (29) angehoben zu werden, wobei das erste Ende (27) der Kette verankert ist und das zweite Ende (28) an dem Hubgabelschlitten (25) befestigt ist.

## Revendications

1. Assemblage de chaîne de levage (26), englobant :
un moyen d'ancrage ;
un élément de support (7), pouvant être déplacé par rapport au moyen d'ancrage, de sorte à varier la distance entre le moyen d'ancrage et l'élément de support ; et
une chaîne, comportant des première et deuxième extrémités (27, 28), la chaîne comprenant plusieurs assemblages de maillons entrelacés (1, 2), chaque assemblage de maillons comprenant des maillons externes (1) et un élément de maillon intermédiaire (2 ; 8, 9 ; 11 ; 14 ; 17 ; 20), deux assemblages de maillons adjacents étant connectés par l'intermédiaire d'une connexion pivotante (3, 5) entre l'élément de maillon intermédiaire d'un assemblage et les maillons externes de l'autre assemblage ;
la première extrémité (27) de la chaîne étant ancrée sur le moyen d'ancrage et une partie de la chaîne étant entraînée au-dessus de l'élément de support (7) ;
de sorte que la au moins surface de support (6) d'au moins un élément de maillon intermédiaire est en contact coulissant avec une surface de l'élément de support (7) ; et
dans lequel, en service, la deuxième extrémité (28) de la chaîne est fixée sur une charge (25, 30), de sorte que l'élément de support (7) et le moyen d'ancrage supportent la charge par l'intermédiaire de la chaîne ;
**caractérisé en ce que** l'élément de maillon intermédiaire (2 ; 8 ; 9 ; 11 ; 14 ; 17 ; 20) définit au moins une surface de support (6), formant une partie de la surface externe de la chaîne, radialement vers l'extérieur de l'axe de pivotement, la au moins une surface de support (6) comprenant un matériau présentant un coefficient de frottement inférieur à celui de l'acier ; et **en ce que** le déplacement de l'élément de support (7) par rapport au moyen d'ancrage entraîne le glissement de la chaîne au-dessus de la surface de l'élément de support, l'élément de support (7) étant fixé contre une rotation.

2. Assemblage de chaîne de levage selon la revendication 1, dans lequel l'élément de maillon intermédiaire (2 ; 8 ; 9 ; 11 ; 14 ; 17 ; 20) définit au moins deux surfaces de support (6), définissant des parties de surfaces externes opposées de la chaîne.

3. Assemblage de chaîne de levage selon les revendications 1 ou 2, dans lequel l'élément de maillon intermédiaire (2 ; 8 ; 9 ; 11 ; 14 ; 17 ; 20) et la au moins une surface de support (6) sont formés d'une seule pièce à partir du même matériau.

4. Assemblage de chaîne de levage selon l'une quelconque des revendications 1 à 3, dans lequel une partie de la au moins une surface de support (6) est espacée radialement davantage du pivot qu'une quelconque partie des maillons externes (1).

5. Assemblage de chaîne de levage selon la revendication 4, dans lequel une partie d'extension du maillon intermédiaire (2 ; 8 ; 9 ; 11 ; 14 ; 17 ; 20) s'étend radialement à partir du pivot sur une distance supérieure à celle des maillons externes et comprend un matériau présentant un coefficient de frottement réduit, la partie d'extension définissant la surface de support (5).

6. Assemblage de chaîne de levage selon les revendications 4 ou 5, dans lequel la partie d'extension est effilée, de sorte à permettre un pivotement à un degré supérieur de chaque connexion pivotante.

7. Assemblage de chaîne de levage selon l'une quelconque des revendications précédentes, dans lequel le maillon intermédiaire (2 ; 8 ; 9 ; 11 ; 14 ; 17 ; 20) comprend de la céramique.

8. Assemblage de chaîne de levage selon l'une quelconque des revendications 1 à 6, dans lequel le matériau est un matériau thermoplastique, par exemple du polyaryléther-éthercétone (PEEK).

9. Assemblage de chaîne de levage selon l'une quelconque des revendications précédentes, dans lequel les maillons externes (1) comprennent de l'acier.

10. Assemblage de chaîne de levage selon l'une quelconque des revendications précédentes, dans lequel le maillon intermédiaire (14 ; 17) définit une paire d'éléments d'attache opposés (15 ; 18) destinés à recevoir un câble ou similaire.

11. Assemblage de chaîne de levage selon l'une quelconque des revendications précédentes, dans lequel l'élément de support (7) peut être déplacé par rapport au moyen d'ancrage par un actionneur (29).

12. Assemblage de chaîne de levage selon la revendication 11, dans lequel l'actionneur est un cylindre hydraulique (29).

13. Utilisation d'un assemblage de chaîne de levage selon l'une quelconque des revendications 1 à 12, pour entraîner un chariot de levage à fourche (25) d'un véhicule élévateur à fourche, la chaîne étant entraînée au-dessus d'un élément de support (7) et étant en contact coulissant avec celui-ci, l'élément de support étant configuré de sorte à être soulevé par un moyen d'entraînement (29), la première extrémité (27) de la chaîne étant ancrée et la deuxième extrémité (28) étant fixée sur le chariot de levage à fourche (25).
